# EUROPEAN PATENT SPECIFICATION

(11) **EP 2 319 796 B1**
(45) Date of publication and mention of the grant of the patent: **21.05.2014**
(21) Application number: 09843725.4
(22) Date of filing: 24.04.2009
(51) Int. Cl.: B64C 39/02, B64C 27/20, B66F 19/00

(54) **TETHERED AIRLIFT UNIT**
ANGEBUNDENE FLUGTRANSPORTEINHEIT
ENGIN DE TRANSPORT AERIEN AMARRE

(43) Date of publication of application: 11.05.2011
(73) Proprietor: Avia Engineering, Kazan 420030 (RU); Avia Engineering GmbH, 10234 Berlin (DE)
(72) Inventor: DVOEGLAZOV, Valery Vyacheslavovich, Kazan 420030 (RU)
(74) Representative: Bucher, Ralf Christian
(86) International application number: PCT/RU2009/000197
(87) International publication number: WO 2010/123395

(56) References cited:
- WO-A1-2008/025139
- FR-A1- 2 216 173
- GB-A- 897 756
- RU-C1- 2 133 210
- RU-C2- 2 159 197
- RU-U1- 80 547
- US-A- 2 453 857
- US-A- 3 223 358
- US-A- 3 223 358

## Description

### FIELD OF THE INVENTION

The invention relates to the field of helicopter construction, more specifically, to helicopters with a cord for retention of the helicopter relative to the earth's surface.

### BACKGROUND OF THE INVENTION

The airlift is known (US Patent No. 3223358 published on December 14, 1965) comprising an engine-propeller unit and means for retention of the engine-propeller unit relative to the earth's surface. The means is fixed on the engine-propeller unit at a point in the propeller rotation axis. A shortcoming of that technical solution consists in that the control element to retain the engine-propeller unit relative to the earth's surface is fixed below the center of gravity of the engine-propeller unit. Due to this, any tilting of the engine-propeller unit (under the effect of any perturbations) results in that the force of gravity acting on the engine-propeller unit produces an overturning moment relative to the point at which the retention means are fixed to the unit. As a result, the airlift is characterized by a low mobility, as well as moderate reliability and safety in the process of operation.

An airlift is also known from FR 2216173A1, which is regarded as the closest prior art, comprises an engine-propeller unit, including propeller and a power package, and means for retention of the engine-propeller unit relative to the earth's surface, fixed on the power package in the axis of rotation of the propeller. A shortcoming of that technical solution consists in that the control element to retain the engine-propeller unit relative to the earth's surface is fixed in the center of gravity of the engine-propeller unit. Due to this, any tilting of the engine-propeller unit (under the effect of any perturbations) results in that the force of gravity acting on the engine-propeller unit, does not form a restoring moment to restore the vertical position of the engine-propeller unit. As a result, the airlift is characterized by a low mobility, as well as moderate reliability and safety in the process of operation.

### SUMMARY OF THE INVENTION

The technical object at which the proposed invention is aimed is a stabilizing moment arising in cases of tilts of the airlift in the air, and thereby an increase in stability of the airlift to perturbations that lead to tilting in the course of operation.

This technical object is achieved by the subject matters of the independent claims 1 and 2. Further embodiments of the invention are specified in the dependent claims.

The afore-said technical effect is achieved through that in the airlift comprising the engine-propeller unit and the means for retention of the unit relative to the earth's surface, fixed on the unit in the propeller's rotation axis, the retention means being located above the center of gravity of the engine-propeller unit. The retention means may be fixed using an articulated joint, for instance, a spherical or gimbal joint. In some situations, the means for retention of the engine-propeller unit relative to the earth's surface may be fastened rigidly, e.g., by means of pinching.

Additionally, to achieve the afore-said technical effect, the engine-propeller unit of the airlift can comprise a frame or a hollow cylinder on which at least one electric motor is mounted. The motor has a ring-like stator part embracing the frame or the hollow cylinder while the retention means are fixed inside the frame or the hollow cylinder with a capability of departure from the axis of rotation of the motor rotor in the case of a tilt or shift of the airlift relative to the ground surface.

The means for retention of the engine-propeller unit relative to the earth's surface may have different designs. In the simplest embodiment, the means is made in the form of a wire rope.

Alternatively, the above means can be a combination of a wire rope and an arm consisting of two knees joined in series, one of which is connected to the wire rope and the other is fixed inside the frame or hollow cylinder and capable of turning around the propeller's axis of rotation, in particular, actuated by its drive, and a drive to control the angle between the knees.

As a further alternative, the means for retention of the engine-propeller unit relative to the earth's surface can be a combination of a wire rope and a frame fixed with the help of a spherical or gimbal joint on the engine-propeller unit. The frame can be made capable of embracing the above unit, that is, the unit can be placed inside the frame. Such being the case, the engine-propeller unit can comprise an electric motor and a bearing support mounted in the stator part of the electric motor for the frame of the above retention means, the frame being fixed with the help of a spherical or gimbal joint on the butt end of the bearing support, while the retention means can comprise an electric cable connecting a ground-based electric power source with the electric motor of the engine-propeller unit. The bearing support can be made hollow to place therein the electric cable connecting the ground-based electric power source with the electric motor of the engine-propeller unit.

The airlift's engine-propeller unit can comprise two propellers and the frame of the retention means can be fixed on the unit in between the first and the second propellers.

Also, the frame of the means for retention of the engine-propeller unit relative to the earth's surface can be attached beneath the propeller, or propellers if the unit comprises two propellers. In particular, the engine-propeller unit can comprise a drive made with a body on which the frame of the above means is fixed.

The engine-propeller unit does not necessarily comprise an electric motor. As an alternative, an internal combustion engine can be used with fuel supplied via a pipeline that forms part of the means for retention of the engine-propeller unit relative to the earth's surface. Moreover, the use of an electric motor does not imply supplying electricity from the earth's surface. An electric power source can be placed on the airlift or the engine-propeller unit or the means for retention of the engine-propeller unit relative to the earth's surface.

### BRIEF DESCRIPTION OF THE DRAWINGS

The invention is described with reference to the following drawings:
FIG. 1 is a schematic representation of the airlift in which the means for retention of the engine-propeller unit relative to the earth's surface are fixed inside a frame or a hollow cylinder of the engine-propeller unit;
FIG.2 is a detailed picture of the arrangement to fix the means for retention of the engine-propeller unit relative to the earth's surface inside the frame or hollow cylinder, and the fixation of propeller hubs on rotor parts of the electric motors;
FIG.3 depicts a diagram of forces acting on the airlift under external disturbances;
FIG.4 presents a diagram of the airlift with means for retention of the engine-propeller unit relative to the earth's surface, such means comprising a tether and an arm;
FIG.5 displays a picture of the airlift with means for retention of the engine-propeller unit relative to the earth's surface, such means comprising a tether and a frame fixed on the body of the drive of the engine-propeller unit;
FIG.6 presents a picture of the airlift with means for retention of the engine-propeller unit relative to the earth's surface, such means comprising a tether and a frame embracing one of two propellers of the engine-propeller unit;
FIG.7 displays mutual arrangement of the frame of the means for retention of the engine-propeller unit and the engine-propeller unit under conditions of a tilted engine-propeller unit;
FIG.8 presents a picture of the airlift with the means for retention of the engine-propeller unit relative to the earth's surface in the form of a tether and a frame embracing the engine-propeller unit with two propellers.

### DESCRIPTION OF THE INVENTION

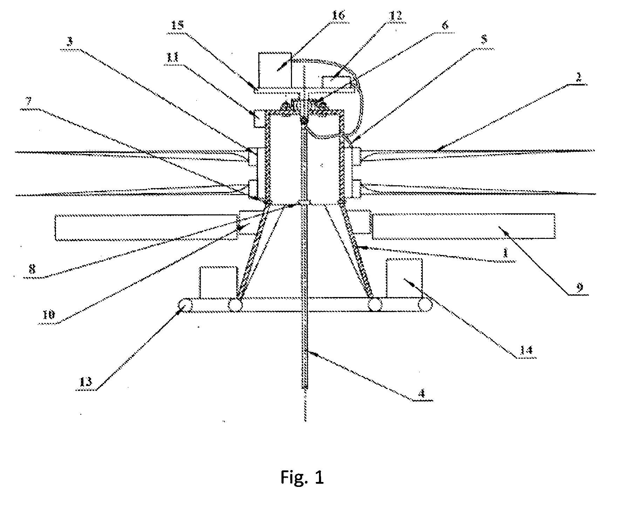

The airlift as depicted in FIG. 1 consists of an engine-propeller unit comprising a frame or a hollow cylinder (1), propellers (2), a power package (3), and means (4) for retention of the engine-propeller unit relative to the earth's surface, fixed on the above unit.

The means (4) for retention of the engine-propeller unit relative to the earth's surface is made in the form of a wire rope or a carrying electric cable with the upper end fixed inside the frame or hollow cylinder (1) in such a way that the attaching point is located in the axis of rotation of the propeller (2) upward of the center of gravity of the above unit and the low end of the wire rope or the carrying electric cable fixed on the land surface or a transport vehicle.

Normally, one or two propellers with a fixed pitch is (are) employed in an engine-propeller unit. To meet some special objectives where a higher efficiency is required, variable-pitch propellers can be employed. The propellers (2) are caused to be rotated by electric motors of the power package (3). In the simplest version of embodiment, one electric motor rotates one propeller whereas more sophisticated versions can use two or more motors per propeller. Such versions may result from special requirements, e.g. redundancy, yet in a general way the configuration with one motor features higher efficiency from the viewpoint of decreasing the weight of the engine-propeller unit. Electric power to the motors of the power package is supplied by means of the electric cable (5), which can form part of the means (4) for retention of the engine-propeller relative to the earth's surface. Additionally, the means (4) can also comprise wires for data transmission for, e.g. airlift control, and wires from devices aboard the airlift, including fiber-optical and coaxial cables.

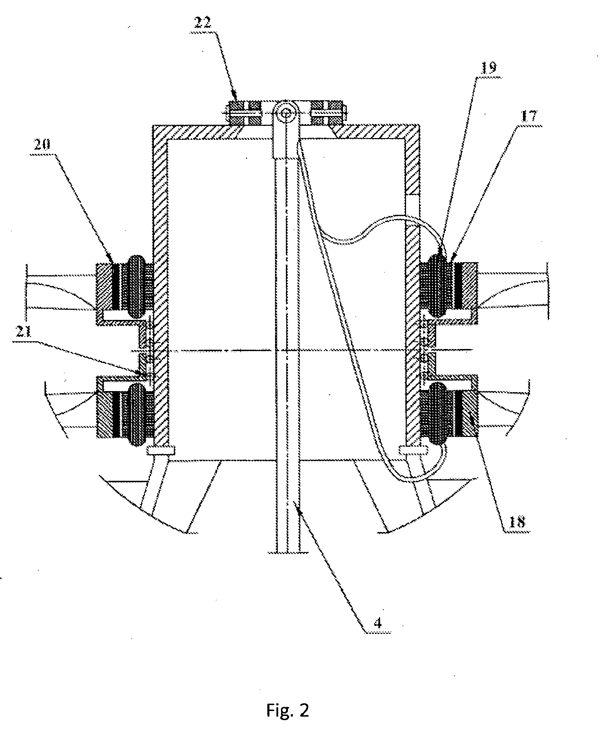

The means (4) for retention of the engine-propeller unit relative to the earth's surface is fixed on the above unit so as to provide the capability of the means (4) to depart from the propeller's axis of rotation under conditions of a tilt or shift of the airlift relative to the earth's surface. To this end, the means (4) can be fixed with the help of an articulated joint, for instance, a spherical joint (6), whose advantage is simplicity, or a gimbal joint (pos.22 in FIG.2). In some cases, where a flexible wire rope or a conducting rope is used, the means (4) for retention of the engine-propeller unit relative to the earth's surface can be fixed rigidly, e.g., by means of pinching.

To prevent any touching between the frame or the hollow cylinder (1) and the means (4) for retention of the engine-propeller unit relative to the earth's surface, which may arise in the case of a tilt of the airlift's engine-propeller unit as a result of external disturbance, for instance, lateral air stream, the airlift is fitted with position detectors that produce a signal characterizing the position of the means (4) relative to the frame or the hollow cylinder (1). As such position detectors, induction pickups, optical sensors, capacitive pickups, Hall sensors, potentiometer transducers, tension gauges, etc. can be used. If induction pickups or Hall sensors are employed, the stationary part of the sensor (7) is placed on the frame or hollow cylinder (1) while a mobile part of the sensor (8) is attached to the means (4) for retention of the engine-propeller unit relative to the earth's surface. When using other sensors, they can be placed on solely either the frame or hollow cylinder (1), or the above means (4). Based on signals from such sensors, the airlift control system precludes any hazardous touching owing to forced changing of relative positions of the frame or hollow cylinder (1) and the means (4).

On the frame or hollow cylinder (1), adjustable aerodynamic surfaces (9) can be arranged in the induced flow beneath the propellers (2). They are controlled by means of electric, hydraulic or electrohydraulic steering gear (10). The adjustable aerodynamic surfaces (9) ensure pitch and roll control, as well as turns around the vertical axis. Pitch and roll control is necessary for shifting the airlift in space relative to the tethering point, i.e. the low end of the means (4), on the ground or a transport vehicle, whereas to control rotation around the vertical axis is an additional stabilization method to suppress the rotation of the airlift. Also, the adjustable aerodynamic surfaces (9) compensate the counter-torque arising in case one of the propellers (2) fails and the power delivered to the other propeller increases. Moreover, the adjustable aerodynamic surfaces (9) can be used for correction of disturbing air streams.

To prevent rotation of the airlift's engine-propeller unit around the vertical axis, a turn sensor (or turn sensors) (11), e.g. a gyro, acceleration gauge, relative bearing transmitter, side-slip sensor, etc. can be installed on the frame or hollow cylinder (1). Based on signals produced by such a sensor, the stabilization system (12) provides differentiated control of the electric motors by reducing the rotation velocity of one propeller and/or raising that of the other propeller. In the case of variable-pitch propellers, the stabilization system (12) performs differentiated control of the propeller pitch by increasing the pitch for one propeller and reducing it for the other propeller.

From below, an underframe (13) and space (14) for placement of disposable load (e.g. IR imager, photo and video cameras, antennas, etc.) are arranged on the frame or hollow cylinder (1).

To preclude free fall of the airlift, an emergency life-saving parachute system (16) is installed on the upper platform (15) of the airlift. The system comes automatically into action in the case of failure or de-energization of the power package (3).

If the engine-propeller unit is embodied with the frame or hollow cylinder (1) (see FIG.2), an electric motor with a ring-like stator part (17) embracing the frame of hollow cylinder can be mounted on such a frame or hollow cylinder. In such a case, the propellers (2) are placed directly on rotors (18) of the electric motors. Each motor comprises a multi-polar stator (17) with coil windings (19), and a rotor (18) with paired poles of permanent magnets (20). The stator is fixed on the frame or hollow cylinder (1) while the rotor (18), on the frame or hollow cylinder (1) by means of bearings (21). As the electric motors, high-torque ones are employed. If required, the engine-propeller unit can be equipped additionally with one or more reduction gearboxes, and in such a case the propeller is installed on the output shaft of the gearbox.

The means (4) for retention of the engine-propeller unit relative to the earth's surface can be fixed on the above unit using a gimbal joint (22).

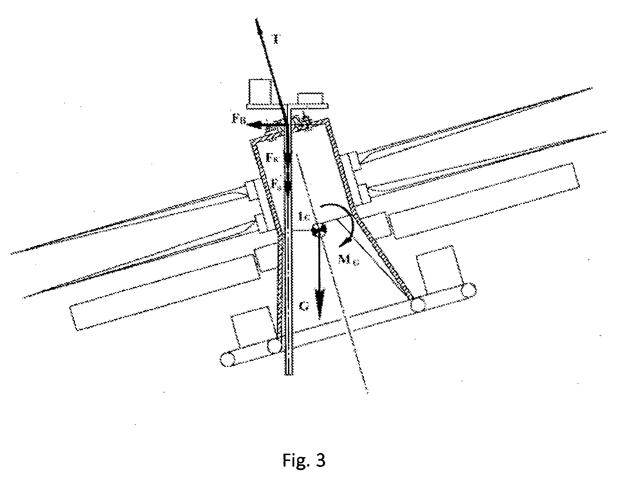

Under an external disturbance, such as shifting the point of fixation of the low end of the means (4) on the transport vehicle, e.g. while the vehicle is moving, or under the effect of air flows, the airlift gets thrown off a stable condition (as shown in FIG.3). Due to the motion of the airlift relative to the tethering point, a restoring force F_{B} arises automatically, which is a vectorial sum of the traction force T, cable tension force Fₖ, and the weight F_{O} of the equipment placed on the upper platform. The force F_{B} shifts the airlift to a stable position. Concurrently, a restoring moment M_{G} arises, being the weight G of the engine-propeller unit multiplied by the arm I_{G}. The restoring moment will be tending to restore a vertical position of the engine-propeller unit while the restoring force will be tending to bring the airlift into a stabilized position.

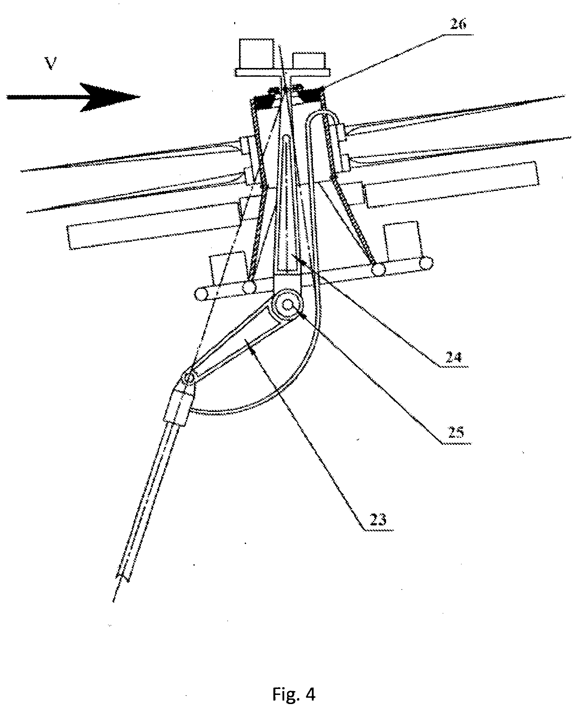

To widen the range of pitch angles of the means (4) fixed inside the frame or hollow cylinder (1), the above means (as shown in FIG.4) are made in the form of a wire rope and an arm comprising two knees joined in series, one of which (23) is connected to the wire rope and the other (24) is fixed inside the frame or hollow cylinder (1) and capable of rotating around the propeller's axis of rotation. The means (4) are equipped with steering gear (25) to control the angle between the knees, and steering gear (26) to ensure rotating the airlift around the propeller's axis of rotation. Operating together, the electric drives ensure the departure of the means (4) by position angle at any azimuth position. When the knee (24) of the arm of the means (4) is approaching the frame or hollow cylinder (1), the airlift control system produces a signal to the arm's electric drive to turn it adequately in the vertical plane. Such being the case, the system adjusts itself, ensuring a requisite gap to prevent touching, and the stability under air disturbance, wind or in the course of the flight of the tethered airlift behind the moving transport vehicle, while the steering gear (26) allows providing the airlift's orientation required in view of the specific technical objectives being pursued.

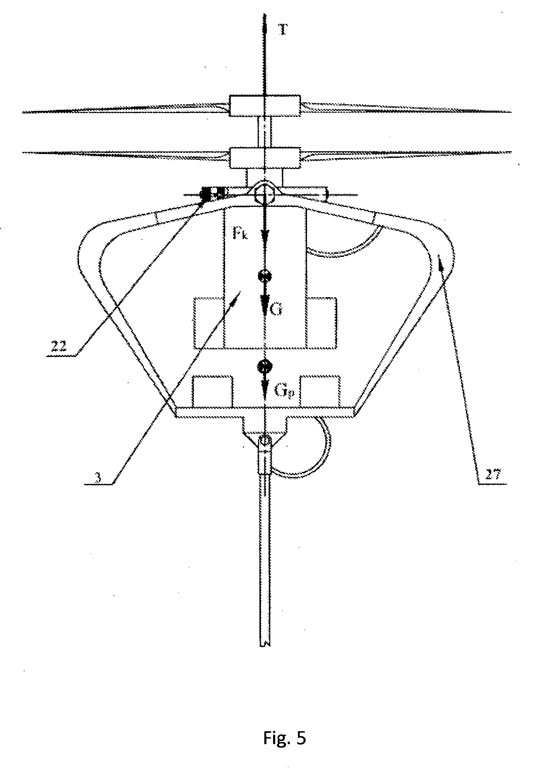

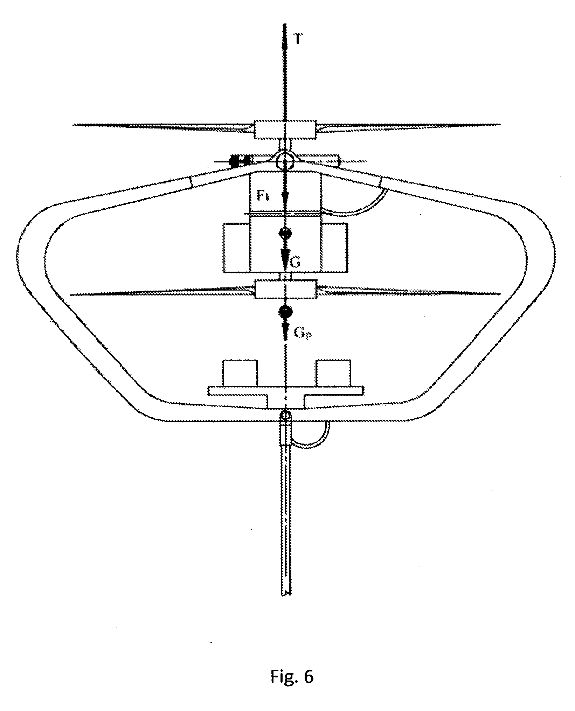

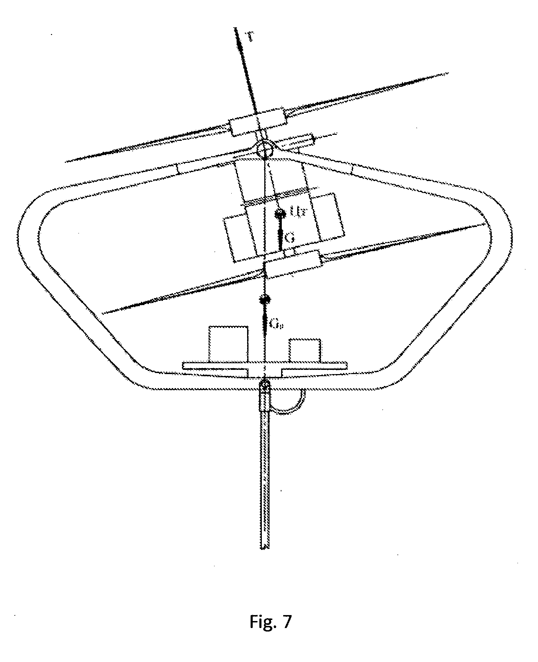

As an alternative, the means (4) for retention of the engine-propeller unit relative to the earth's surface can be embodied (as shown in FIG.5) in the form of a wire rope or a carrying electric cable and a frame (27) attached by means of a spherical or gimbal joint to the above unit. Depending on the objectives posed, different frame design modification options can be materialized. In particular, the frame can be designed in such a way that the power package (3) is placed inside the frame and the propellers (2) are located upward of the point at which the frame is attached to the engine-propeller unit. Alternatively, the frame can be designed as shown in FIGs. 6 and 7, when it is capable of accommodating the power package (3) and one propeller inside, the frame (27) of the means (4) being fixed in between the first and the second propellers. A feature of the above designs of the frame (27) with external fixation on the engine-propeller unit consists in that for any shape of the frame one needs to ensure the location of the frame's center of gravity (together with the equipment installed there, i.e. useful load), Gₚ, in the propellers' axis of rotation at a vertical traction force vector.

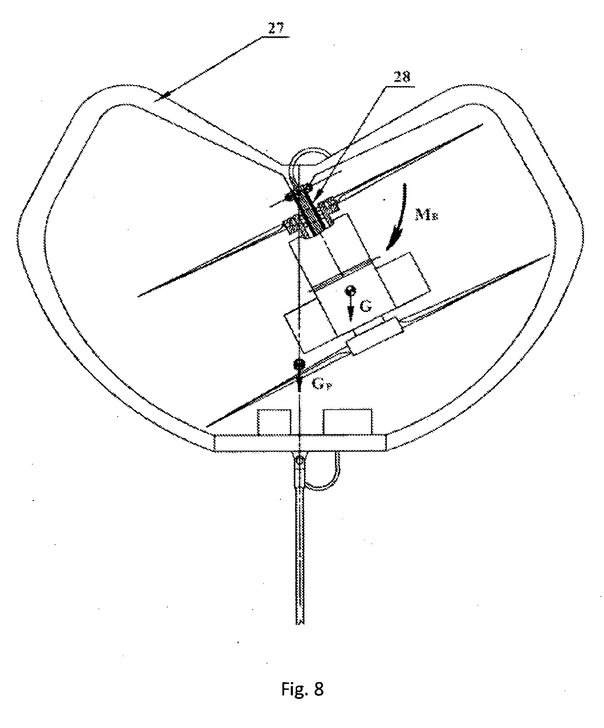

In certain situations, the frame can be designed as shown in FIG.8, namely, it fully embraces the engine-propeller unit (power package and propeller(s)). The frame (27) is fixed above the air propellers by means of a spherical or gimbal joint at the end of a bearing support, e.g. pipe (28), which goes inside the engine-propeller assembly and at which stators of electric motors of the engine-propeller unit are placed. A pipe (28) is preferable since its hollowness is used for laying an electric power supply cable from the frame (27) of the means (4) to the electric motor.

## Claims

1. An airlift comprising
an engine-propeller unit including a propeller (2) and a power package (3), and
means (4) for retention of the engine-propeller unit relative to the earth's surface, being fixed on the power package (3) in the axis of rotation of the propeller (2),
wherein the means (4) for retention of the engine-propeller unit relative to the earth's surface includes a wire rope and a frame (27) fixed above the center of gravity of the engine-propeller unit, and the power package (3) is placed inside the frame (27).

2. An airlift comprising
an engine-propeller unit including a frame or a hollow cylinder (1) and a propeller (2), and
means (4) for retention of the engine-propeller unit relative to the earth's surface, being fixed on the inside of the frame or the hollow cylinder (1) in the axis of rotation of the propeller (2),
wherein the airlift also comprises at least one electric motor having a ring-like stator part (17) embracing the frame or the hollow cylinder (1), and the means for retention of the engine-propeller unit relative to the earth's surface is fixed above the center of gravity of the engine-propeller unit.

3. The airlift as set forth in claim 2, wherein the means (4) for retention of the engine-propeller unit relative to the earth's surface are made in the form of a wire rope.

4. The airlift as set forth in claim 2, wherein the means (4) for retention of the engine-propeller unit relative to the earth's surface are made in the form of a wire rope and an arm comprising two knees (23, 24) joined in series and a drive (25) to adjust the angle between the knees, one knee (23) of the arm being connected to the wire rope and the other knee (24) fixed inside the frame or the hollow cylinder (1) and capable of rotating around the propeller's axis of rotation.

5. The airlift as set forth in claim 1, wherein the engine-propeller comprises two propellers (2) and the frame (27) of the means for retention of the engine-propeller unit relative to the earth's surface is fixed below both propellers (2).

6. The airlift as set forth in claim 1,
wherein the engine-propeller unit is located inside the frame of the means for retention of the engine-propeller unit relative to the earth's surface.

7. The airlift as set forth in claim 1, wherein
the engine-propeller unit comprises an electric motor and a bearing support placed in the stator part of the electric motor for the frame of the means for retention of the engine-propeller unit relative to the earth's surface,
the frame is fixed by means of a spherical or gimbal joint at the end of the bearing support, and
the means for retention of the engine-propeller unit relative to the earth's surface comprise additionally an electric cable that connects a ground-based electric power source to the electric motor of the engine-propeller unit.

8. The airlift as set forth in claim 7, wherein the bearing support is made hollow to place therein the electric cable that connects a ground-based electric power source to the electric motor of the engine-propeller unit.

9. The airlift as set forth in claim 1, wherein the engine-propeller unit comprises two propellers and the frame of the means for retention of the engine-propeller unit relative to the earth's surface is fixed in between the first and the second propellers.

## Patentansprüche

1. Das Hebe- und Trageaggregat, welches beinhaltet
ein Antriebs-Luftschraubenaggregat, das eine tragende Luftschraube (2) und einen Kraftblock (3) aufweist sowie
eine am Kraftblock (3) auf der Rotationsachse der tragenden Luftschraube (2) angeordnete Vorrichtung (4) zum Halten des Antriebs-Luftschraubenaggregats bezogen auf die Erdoberfläche,
**dadurch gekennzeichnet, dass** die Vorrichtung (4) zum Halten des Antriebs-Luftschraubenaggregats bezogen auf die Erdoberfläche ein Drahtseil und einen Rahmen (27) aufweist, die oberhalb des Schwerpunktes des Antriebs-Luftschraubenaggregats befestigt sind, wobei der Kraftblock (3) innerhalb des Rahmens (27) angeordnet ist.

2. Das Hebe- und Trageaggregat, welches beinhaltet
das Antriebs-Luftschraubenaggregat, das einen Rahmen oder einen hohlen Zylinder (1) und die tragende Luftschraube (2) sowie
die innerhalb des Rahmens oder des Hohlzylinders (1) auf der Rotationsachse der tragenden Luftschraube (2) angeordnete Vorrichtung (4) zum Halten des Antriebs-Luftschraubenaggregats bezogen auf die Erdoberfläche aufweist,
**dadurch gekennzeichnet, dass** das Hebe- und Trageaggregat auch mindestens über einen elektrischen Motor verfügt, der einen ringförmigen Statorteil (17) aufweist, der den Rahmen oder den Hohlzylinder (1) umfasst, und die Vorrichtung (4) zum Halten des Antriebs-Luftschraubenaggregats bezogen auf die Erdoberfläche oberhalb des Schwerpunktes des Antriebs-Luftschraubenaggregats angeordnet ist.

3. Das Hebe- und Trageaggregat nach Anspruch 2, **dadurch gekennzeichnet, dass** Vorrichtungen zum Halten des Antriebs-Luftschraubenaggregats bezogen auf die Erdoberfläche (4) in Form eines Drahtseils ausgeführt sind.

4. Das Hebe- und Trageaggregat nach Anspruch 2, **dadurch gekennzeichnet, dass** Vorrichtungen zum Halten des Antriebs-Luftschraubenaggregats bezogen auf die Erdoberfläche (4) in Form eines Drahtseils sowie eines zwei sequentiell verbundene Knie (23, 24) und einen Antrieb (25) für die Winkeleinstellung zwischen den Knien aufweisenden Hebels ausgeführt sind, dabei ist eines der Hebelknie (23) mit dem Drahtseil verbunden und das andere Knie (24) ist innerhalb des Rahmens oder des Hohlzylinders (1) befestigt und über die Rotationsmöglichkeit um die Rotationsachse der tragenden Luftschraube verfügt.

5. Das Hebe- und Trageaggregat nach Anspruch 1, **dadurch gekennzeichnet, dass** das Antriebs-Luftschraubenaggregat über zwei tragende Luftschrauben (2) verfügt und der Rahmen (27) der Vorrichtungen zum Halten des Antriebs-Luftschraubenaggregats bezogen auf die Erdoberfläche unterhalb der beiden tragenden Luftschrauben (2) angeordnet ist.

6. Das Hebe- und Trageaggregat nach Anspruch 1,
**dadurch gekennzeichnet, dass** das Antriebs-Luftschraubenaggregat innerhalb des Rahmens der Vorrichtungen zum Halten des Antriebs-Luftschraubenaggregats bezogen auf die Erdoberfläche angeordnet ist.

7. Das Hebe- und Trageaggregat nach Anspruch 1 **dadurch gekennzeichnet, dass**
das Antriebs-Luftschraubenaggregat einen Elektromotor und eine im Statorteil für den Rahmen der Vorrichtungen zum Halten des Antriebs-Luftschraubenaggregats bezogen auf die Erdoberfläche angeordnete Kugellagerstütze aufweist,
der Rahmen mithilfe einer Kugelscharniere oder einer Kardanaufhängung am Ende der Kugellagerstütze angeordnet ist und
die Vorrichtungen zum Halten des Antriebs-Luftschraubenaggregats bezogen auf die Erdoberfläche zusätzlich ein elektrisches Kabel aufweisen, das eine am Boden angeordnete Energiequelle mit dem Elektromotor des Antriebs-Luftschraubenaggregats verbindet.

8. Das Hebe- und Trageaggregat nach Anspruch 7 **dadurch gekennzeichnet, dass** die Kugellagerstütze hohl ausgeführt ist, mit dem Zweck, in deren Höhlung das Elektrokabel zu unterbringen, das die am Boden angeordnete Energiequelle mit dem Elektromotor des Antriebs-Luftschraubenaggregats verbindet.

9. Das Hebe- und Trageaggregat nach Anspruch 1 **dadurch gekennzeichnet, dass** das Antriebs-Luftschraubenaggregat zwei tragende Luftschrauben aufweist, und der Rahmen der Vorrichtungen zum Halten des Antriebs-Luftschraubenaggregats bezogen auf die Erdoberfläche zwischen der ersten und der zweiten tragenden Luftschraube angeordnet ist.

## Revendications

1. Unité d'ascension, comprenant
un groupe moteur-hélice, comprenant une voilure tournante (2) et un groupe motopropulseur (3), et
un moyen (4) de maintien du groupe moteur-hélice par rapport à la surface du sol, fixé sur le groupe motopropulseur (3) à l'axe de rotation de la voilure tournante (2),
**caractérisée en ce que** le moyen (4) de maintien du groupe moteur-hélice par rapport à la surface du sol comprend un câble de fils métalliques et un cadre (27), fixés au-dessus du centre de gravité du groupe moteur-hélice, et que le groupe motopropulseur (3) est disposé à l'intérieur du cadre (27).

2. Unité d'ascension, comprenant
un groupe moteur-hélice, comprenant un cadre ou un cylindre creux (1) et une voilure tournante (2), et
un moyen (4) de maintien du groupe moteur-hélice par rapport à la surface du sol, fixé à l'intérieur du cadre ou du cylindre creux (1) sur l'axe de rotation de la voilure tournante (2),
**caractérisée en ce que** le groupe moteur-hélice comprend également au moins un moteur électrique présentant sa partie stator sous forme d'un anneau (17), entourant le cadre ou le cylindre creux (1), le moyen de maintien du groupe moteur-hélice par rapport à la surface du sol étant fixé au-dessus du centre de gravité du groupe moteur-hélice.

3. Unité d'ascension selon la revendication 2, **caractérisée en ce que** les moyens de maintien du groupe moteur-hélice par rapport à la surface du sol (4) sont réalisés sous forme d'un câble de fils métalliques.

4. Unité d'ascension selon la revendication 2, **caractérisée en ce que** les moyens de maintien du groupe moteur-hélice par rapport à la surface du sol (4) sont réalisés sous forme d'un câble de fils métalliques et d'un levier comprenant deux coudes reliés en série (23, 24) et une commande (25) de réglage de l'angle entre les coudes, l'un des coudes (23) du levier étant relié au câble de fils métalliques et l'autre coude (24) étant fixé à l'intérieur du cadre ou du cylindre creux (1) et pouvant tourner autour de l'axe de rotation de la voilure tournante.

5. Unité d'ascension selon la revendication 1, **caractérisée en ce que** le groupe moteur-hélice comprend deux voilues tournantes (2), et que le cadre (27) des moyens de maintien du groupe moteur-hélice par rapport à la surface du sol est fixé en dessous des deux voilures tournantes (2).

6. Unité d'ascension selon la revendication 1,
**caractérisée en ce que** le groupe moteur-hélice est disposé à l'intérieur du cadre des moyens de maintien du groupe moteur-hélice par rapport à la surface du sol.

7. Unité d'ascension selon la revendication 1, **caractérisée en ce que**
le groupe moteur-hélice comprend un moteur électrique et un appui de palier, monté dans la partie stator du moteur électrique pour le cadre des moyens de maintien du groupe moteur-hélice par rapport à la surface du sol,
le cadre est fixé à l'aide d'une charnière ou d'un cardan de suspension à l'extrémité de l'appui de palier, et
les moyens de maintien du groupe moteur-hélice par rapport à la surface du sol comprennent en plus un câble électrique reliant une source d'alimentation électrique au sol au moteur électrique de groupe moteur-hélice.

8. Unité d'ascension selon la revendication 7, **caractérisée en ce que** l'appui du palier est creux pour pouvoir placer dans sa cavité un câble électrique reliant la source d'alimentation électrique au sol au moteur électrique de groupe moteur-hélice.

9. Unité d'ascension selon la revendication 1, **caractérisée en ce que** le groupe moteur-hélice comprend deux voilures tournantes et que le cadre des moyens de maintien du groupe moteur-hélice par rapport à la surface du sol est fixé entre la première et la seconde voilures tournantes.
